# EUROPÄISCHE PATENTANMELDUNG

(11) **EP 4 403 023 A1**
(43) Veröffentlichungstag der Anmeldung: **24.07.2024**
(21) Anmeldenummer: 23182239.6
(22) Anmeldetag: 29.06.2023
(51) Int. Cl.: A01J 25/08, A01J 25/12, A01J 25/15, G01F 1/74, G01F 15/00

(54) **VORRICHTUNG ZUR BESTIMMUNG DES MASSENSTROMS VON KÄSEBRUCHKÖRNERN UND MOLKE**

(30) Priorität: 19.01.2023 CH 482023
(71) Anmelder: Kalt Maschinenbau AG, 9604 Lütisburg (CH)
(72) Erfinder: Grüninger, Siegfried, 9011 St. Gallen (CH)
(74) Vertreter: Frommhold, Joachim

(57) **Zusammenfassung**

Die Erfindung betrifft eine Vorrichtung zur Bestimmung des Massenstroms von Käsebruchkörnern und Molke, insbesondere in einem Strom Käserohmasse, der aus einem Käsefertiger in Käseformen einer Käsepresse strömt.

Die Vorrichtung soll aufwandsarm und zuverlässig sein.

Die Käsepresse umfasst zumindest eine offene Wanne (2) und einen Verteilkopf (5) mit mindestens einem Dosierkopf (6) zum Einschwemmen der Käserohmasse, der entlang der Längsseiten der Wanne (2) verfahrbar ist.

Am Verteilkopf (5), der mindestens einen Dosierkopf (6) aufweist, ist in Durchflussrichtung des Massestroms dem Dosierkopf (6) ein Durchflussmessgerät (10) vorgelagert angeordnet.

## Beschreibung

Die Erfindung betrifft eine Vorrichtung zur Bestimmung oder Steuerung des Massenstroms von Käsebruchkörnern und Molke, insbesondere in einem Strom Käserohmasse, der aus einem Käsefertiger in Käseformen einer Käsepresse strömt.

Zur Käseherstellung wird Milch in einem Käsekessel, einem Käsefertiger Lab zugesetzt und die Milch wird für den Käsungsprozess mittels Rühr- und Schneidflügel ständig gerührt. Entstehende gallertartige Käsebrocken werden mittels der Rühr- und Schneidflügel geschnitten, siehe zum Beispiel DE 29812845 U1. Beim Schneiden wird der Käsebruch in Käsebruchkörner zerschnitten, möglichst in Käsebruchkörner mit gleichmässiger Grösse. Der Käsebruch wird unter Einwirkung des Labs und von Wärme fest, spröde und zerbrechlich. Dieser Käsebruch ist somit empfindlich gegen mechanische Beanspruchung, so dass der Rührvorgang schonend erfolgt. Schonend muss auch die Molke abgesaugt werden, um die Käsebruchkörner in einen stabilen körnigen Zustand zu überführen.

Die Absaugung der Molke erfolgt gemäss CH 537142 A mittels einer Ablassvorrichtung, bei der die Molke durch einen, von einem Siebmantel umgebenen Molkesammelraum, der mit einer Ablaufleitung verbunden ist, abgesaugt wird. Der Siebmantel soll das Eindringen von Käsebruch in den Molkesammelraum verhindern.

Um den Dickungszustand der Rohkäsemasse bzw. des Käsebruchs während des Betriebs des drehenden Rührwerks ermitteln zu
können, ist es bereits bekannt, sogenannte Dickungssonden im Behälter des Käsefertigers fest anzuordnen.

Es ist auch bekannt, den Anteil an Käsebruch in einem Käsebruch-Molke-Gemisch in einem Behältnis mittels eines Tomographen zu bestimmen. Gemäss DE 102009036633 A1 ist im Behältnis mindestens eine Elektrode eines Tomographiesensors angeordnet, welcher mit einer Auswerteeinheit zur Bestimmung eines Leitfähigkeitswertes gekoppelt ist. Das Behältnis ist ein durchströmtes Rohr oder eine Wanne.

Genutzt wird die Erkenntnis, dass die Leitfähigkeiten von Molke und Käsebruch-Molke-Gemisch verschieden sind.

Einem Puffertank könne somit immer die Menge an Gemisch entnommen werden, die pro Käseform erforderlich ist. Eine vorherige Kalibrierung mit reiner Molke und in Abhängigkeit von deren Herkunft (Kuh, Ziege o. a.) ist dabei erforderlich.

Eine solche Messvorrichtung ist aufwendig und kostenintensiv.

Der Erfindung liegt die Aufgabe zugrunde, eine Vorrichtung zur Bestimmung oder Steuerung des Massenstroms von Käsebruchkörnern und Molke, insbesondere in einem Strom Käserohmasse bereitzustellen, das aufwandsarm, genau und zuverlässig ist. Der Strom Käserohmasse strömt aus einem Käsefertiger in Käseformen, wobei die Käseformen insbesondere in einer Käsepresse angeordnet sind.

Die Aufgabe ist mit den kennzeichnenden Merkmalen des Patentanspruchs 1 gelöst.

Die erfindungsgemässe Vorrichtung zur Bestimmung des Massenstroms von Käsebruchkörnern und Molke, die insbesondere zur Verwendung in einer Käsepresse, vor allem einer Kassettenpresse geeignet ist. Die Käsepresse umfasst zumindest eine offene Wanne und einen Verteilkopf mit mindestens einem Dosierkopf zum Einschwemmen der Käserohmasse, wobei der Verteilkopf entlang der Längsseiten der Wanne verfahrbar ist. Am Verteilkopf ist, dem mindestens einem Dosierkopf in Durchflussrichtung des Massestroms ein Durchflussmessgerät (10) vorgelagert angeordnet.

Dabei sind üblicherweise mehrere Dosierköpfe quer zur Längsrichtung der Wanne angeordnet.

Bevorzugte Ausgestaltungen sind in den abhängigen Ansprüchen offenbart.

Vorzugsweise ist dem Durchflussmessgerät ein Stellglied, vorteilhaft ein Quetschventil, zugeordnet und somit kann der Massenstrom des Käsebruchs gemessen und auch geregelt werden.

Das Durchflussmessgerät und das Stellglied können in einem Zuführrohr des Verteilkopfes angeordnet sein. In anderer Ausführung kann aber auch jeder Dosierkopf mit einem Durchflussmessgerät und einem Stellglied versehen sein.

Darüber hinaus können Quetschventile auch lediglich als reines Ventil zum Absperren eines Astes eines Abfüllbaumes eines Verteilkopfes, somit zur Steuerung des Massenstroms von Käsebruchkörnern und Molke eingesetzt werden. Dies insbesondere bei der Käsebruchabfüllung z. B. bei Wendepressen oder einfachen Abfüllwannen. Dabei können Quetschventile auch zusammen mit dem Durchflussmessgerät verwendet werden. Der Massenstrom kann somit lediglich gesteuert oder bestimmt werden.

Die Erfindung wird nachfolgend in einem Ausführungsbeispiel näher beschrieben. In der Zeichnung zeigen die
- Fig. 1:: Teile einer Kassettenpresse mit der erfindungsgemässen Vorrichtung,
- Fig. 2:: eine erfindungsgemässe Vorrichtung nach Fig. 1;

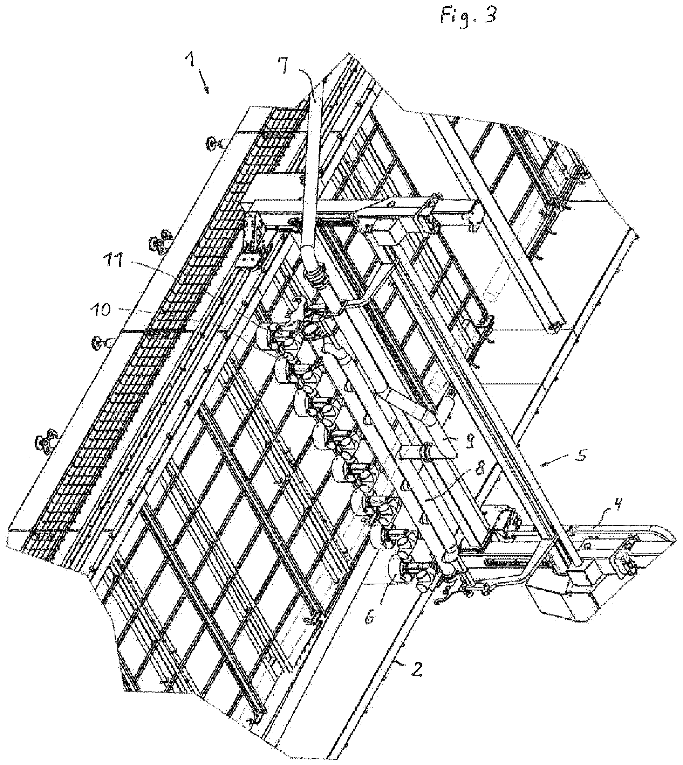

- Fig. 3:: die erfindungsgemässe Vorrichtung in einer zweiten Ausfühungsform;

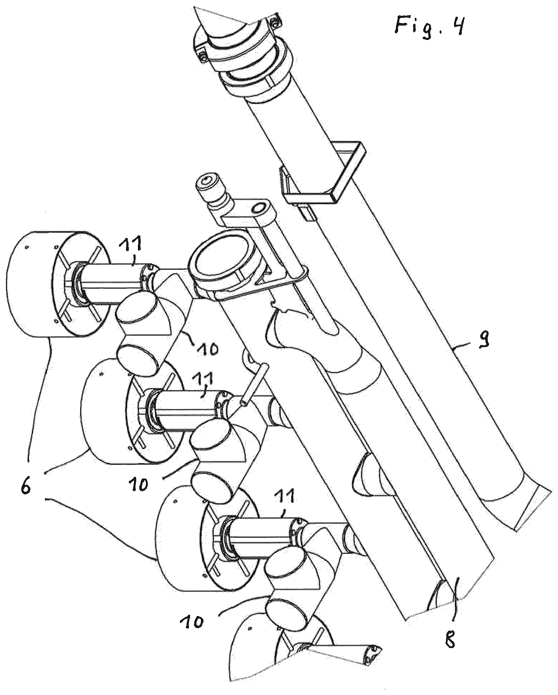

- Fig. 4:: die erfindungsgemässe Vorrichtung nach Fig. 3;
- Fig. 5:: einen Abfüllbaum einer Wendepresse
- Fig. 6:: Details eines Abfüllbaumes nach Fig. 5.

Ein einem Käsefertiger, wie er zum Beispiel in US 10729095 B2 der Anmelderin offenbart ist, wird in einem Behälter (Käsekessel) gerührt, bis Käserohmasse aus Molke und Käsebruch gebildet wird.

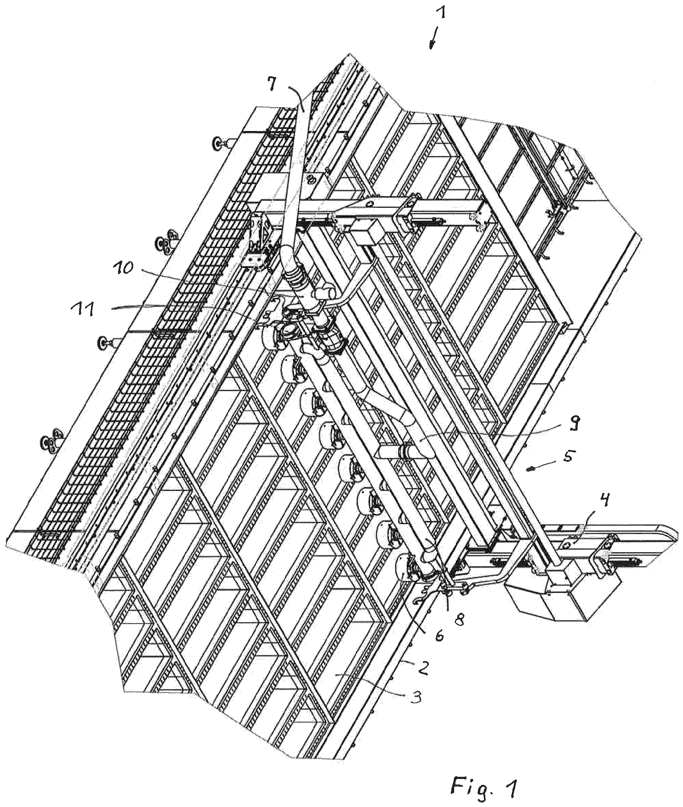

Die Käserohmasse wird anschliessend abgesaugt und durch eine Zuführleitung 7 in Käseformen 3 einer Käsepresse, im Beispiel einer Kassettenpresse 1 (Fig. 1) gepumpt.

Eine Kassettenpresse 1 umfasst im vorgestellten Beispiel zumindest eine in der Draufsicht rechteckige und oben offene Wanne 2 der Kassettenpresse 1 mit in der Draufsicht rechteckigen, oben offenen Kassetten , die in Reihen quer zur Längsrichtung der Wanne 2 nebeneinander angeordnet sind.

In den Kassetten sind Käseformen 3 zur Aufnahme der zu pressenden Käserohmasse angeordnet, die im Beispiel einen gelochten Mantel umfassen, wobei eine Kassette im Beispiel acht Käseformen 3 umfasst.

Sie umfasst weiterhin einen Abfüllapparat zum Einschwemmen der Käserohmasse, der an einem Portalwagen 4 angeordnet ist, der motorisch betrieben entlang der Längsseiten der Wanne 2 verfahrbar ist.

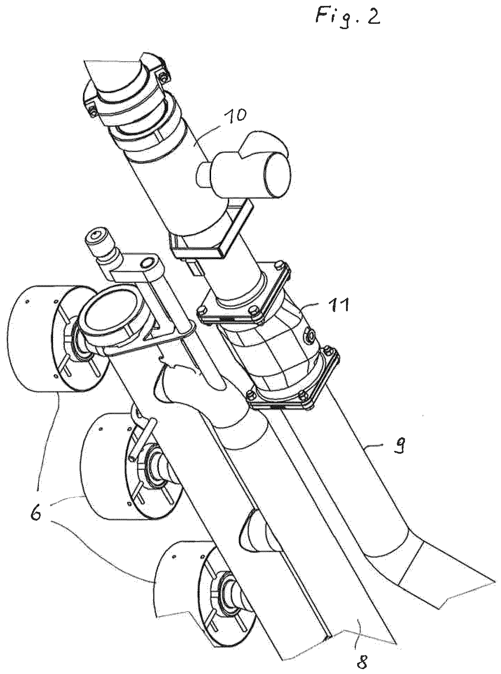

Der Abfüllapparat umfasst einen Verteilkopf 5 mit einer Anzahl Dosierköpfe 6, die auf die Anzahl der in einer Reihe in der Wanne 2 anordenbaren Formen abgestimmt ist. Der Verteilkopf 5 umfasst weiterhin ein Verteilrohr 8 und ein Zuführrohr 9 zur Zuführung und Verteilung der Käserohmasse auf die Dosierköpfe 5 (Fig. 1, 2).

Am Verteilkopf 5 ist, den Dosierköpfen 6 in Durchflussrichtung vorgelagert, ein Durchflussmessgerät 10 im Zuführrohr 9 angeordnet. Dieses Durchflussmessgerät 10 misst während des Pumpvorgangs laufend den prozentualen Festkörperanteil in der Käserohmasse.

Dem Durchflussmessgerät 10 ist ein Stellglied, zum Beispiel ein Quetschventil 11 zugeordnet (Fig. 2). Das Quetschventil 11 wird über einen Differenzdruckregler angesteuert und kann den Rohrquerschnitt und somit die Durchflussmenge verändern.

Somit kann der Massenstrom des Käsebruchs in Längsrichtung der Wanne 2 geregelt werden. Dem Prozess liegt ein Algorithmus zu Grunde, welcher wiederum dem Regelkreis zugrunde liegt.

In einer zweiten Ausführungsform der Vorrichtung wird zusätzlich zur Längsrichtung auch in der Querrichtung der Massenstrom des Käsebruchs geregelt. Hierfür ist jeder Dosierkopf 6 mit einem Durchflussmessgerät 10 und einem Stellglied, einem Quetschventil 11, bestückt. Im Zuführrohr 9 ist bei dieser Ausführungsform kein Durchflussmessgerät 10 vorgesehen.

In beiden Ausführungsformen liefert das Durchflussmessgerät 10 einerseits die Fliessgeschwindigkeit des totalen Massenstroms von Molke und Käsebruch, das total geförderte Volumen vom Messbeginn bis zu einem definierten Zeitpunkt, ein Äquivalent zur Dichte des Massenstroms sowie ein Akustisches Signal in %, welches für das Mass vom Festkörperanteil im Massenstrom, dem Käsebruch (Käsebruchkörner), steht.

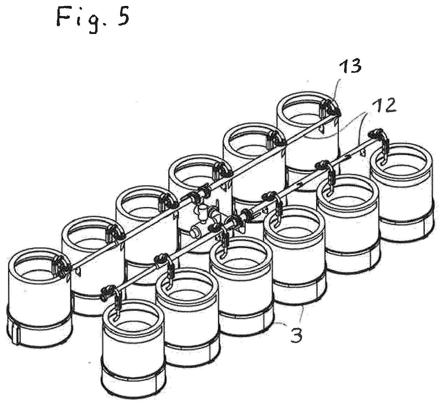

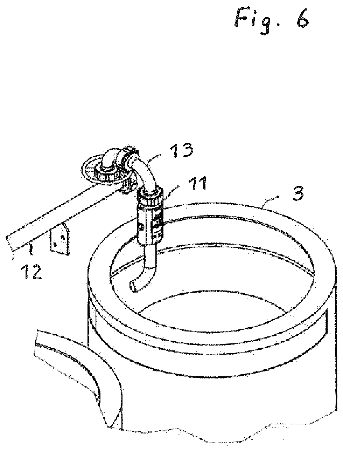

In einer dritter Ausführungsform zeigen die Fig. 5 und 6 den Einsatz von Quetschventilen 11 als reines Absperrventil zum Absperren eines Astes 13 eines Abfüllbaumes 12 einer Wendepresse mit Käseformen 3. Jeder Ast 13 ist mit einem Quetschventil 11 versehen (Fig. 6). Der Abfüllbaum 12 dient der Käsebruchabfüllung in die Käseformen 3.

Der Abfüllbaum 12 ist ebenfalls über eine Zuführleitung 7 mit einem Käsefertiger verbindbar. Analog zu den erstgenannten Ausführungsformen kann dem Quetschventil 11 auch noch ein Durchflussmessgerät 10 zugeordnet (vorgelagert) sein.

### Bezugszeichenliste

1 Kassettenpresse
2 Wanne
3 Käseform
4 Portalwagen
5 Verteilkopf
6 Dosierkopf
7 Zuführleitung
8 Verteilrohr
9 Zuführrohr
10 Durchflussmessgerät
11 Quetschventil
12 Abfüllbaum
13 Ast

## Patentansprüche

**1.** Vorrichtung zur Bestimmung des Massenstroms von Käsebruchkörnern und Molke, die insbesondere zur Verwendung in einer Käsepresse geeignet ist, wobei die Käsepresse zumindest eine offene Wanne (2) und einen Verteilkopf (5) mit mindestens einem Dosierkopf (6) zum Einschwemmen der Käserohmasse, der entlang der Längsseiten der Wanne (2) verfahrbar ist, umfasst,
**dadurch gekennzeichnet, dass** am Verteilkopf (5), der mindestens einen Dosierkopf (6) aufweist, in Durchflussrichtung des Massestroms dem mindestens einen Dosierkopf (6) ein Durchflussmessgerät (10) vorgelagert angeordnet ist.

**2.** Vorrichtung nach Anspruch 1, **dadurch gekennzeichnet, dass** dem Durchflussmessgerät (10) ein Stellglied zugeordnet ist.

**3.** Vorrichtung nach Anspruch 1 oder 2, **dadurch gekennzeichnet, dass** das Stellglied zum Beispiel ein Quetschventil (11) ist.

**4.** Vorrichtung nach einem der Ansprüche 1 bis 3, **dadurch gekennzeichnet, dass** quer zur Längsrichtung der Wanne (2) mehrere Dosierköpfe (6) angeordnet sind.

**5.** Vorrichtung nach einem der Ansprüche 1 bis 4, **dadurch gekennzeichnet, dass** Durchflussmessgerät (10) und Stellglied in einem Zuführrohr (9) des Verteilkopfes (5) angeordnet sind.

**5.** Vorrichtung nach einem der Ansprüche 1 bis 4, **dadurch gekennzeichnet, dass** jeder Dosierkopf (6) mit einem Durchflussmessgerät (10) und einem Stellglied versehen ist.

**6.** Verfahren zur Bestimmung des Massenstroms von Käsebruchkörnern und Molke, der in Käseformen (3) eingeschwemmt wird, **dadurch gekennzeichnet, dass** der gesamte Massenstrom des in der Längsrichtung und/oder Querrichtung einer Wanne (2) einer Käsepresse geregelt, respektive konstant gehalten wird.

**7.** Vorrichtung zur Steuerung des Massenstroms von Käsebruchkörnern und Molke, insbesondere zur Abfüllung von Käsebruchkörnern und Molke, die insbesondere zur Verwendung in einer Käsepresse geeignet ist, wobei die Käsepresse eine Wendepresse oder Abfüllwanne ist, die zumindest einen Verteilkopf (5) mit einem Abfüllbaum (12) zum Einschwemmen der Käserohmasse in die Käseformen umfasst,
**dadurch gekennzeichnet, dass** der Abfüllbaum (12) mindestens einen Ast (13) mit einem Qutschventil (11) aufweist.

**8.** Vorrichtung nach Anspruch 7, **dadurch gekennzeichnet, dass** dem Quetschventil (11) ein Durchflussmessgerät (10) zugeordnet ist.
